# EUROPÄISCHE PATENTSCHRIFT

(11) **EP 1 900 449 B1**
(45) Veröffentlichungstag und Bekanntmachung des Hinweises auf die Patenterteilung: **20.01.2010**
(21) Anmeldenummer: 07016144.3
(22) Anmeldetag: 17.08.2007
(51) Int. Cl.: B21B 45/08

(54) **Spritzbalken einer hydraulischen Entzunderungsanlage und Verfahren zum Betreiben eines solchen Spritzbalkens**
Spray header of a hydraulic descaling facility and method for operating such a spray header
Poutre de pulvérisation d'une installation de décalaminage hydraulique et procédé de fonctionnement d'une telle poutre de pulvérisation

(30) Priorität: 16.09.2006 DE 102006043567
(43) Veröffentlichungstag der Anmeldung: 19.03.2008
(73) Patentinhaber: SMS Siemag AG, 40237 Düsseldorf (DE)
(72) Erfinder: Runkel, Thomas, 57074 Siegen (DE)
(74) Vertreter: Klüppel, Walter

(56) Entgegenhaltungen:
- EP-B1- 1 077 095
- DE-A1-102004 060 825
- JP-A- 9 085 329
- US-A- 5 502 881

## Beschreibung

Die Erfindung betrifft einen Spritzbalken einer hydraulischen Entzunderungsanlage, die eine Anzahl Spritzdüsen aufweist, die von mindestens einem Versorgungskanal des Spritzbalkens mit Entzunderungsfluid versorgt werden kann. Des weiteren betrifft die Erfindung ein Verfahren zum Betreiben eines solchen Spritzbalkens.

Zur Erzielung einer guten Oberflächenqualität, insbesondere bei der Herstellung metallischer Bänder, wird das noch heiße Material entzundert. Dies erfolgt üblicherweise in einer Walzanlage an mehreren Stellen. Es ist bekannt, den Zunder mit einem Medienstrahl unter hohem Druck von der Bandoberfläche zu entfernen; das Medium ist dabei in der Regel Wasser oder Wasserdampf. Das Entzunderungsfluid wird dabei in der Regel über Entzunderungsdüsen geleitet, wobei die Strahlrichtung üblicherweise gegen die Laufrichtung des Bandes in einem definierten Aufprallwinkel gerichtet ist. Bei entsprechend breitem Material sind mehrere Entzunderungsdüsen in einer Reihe quer zur Laufrichtung des Bandes angeordnet.

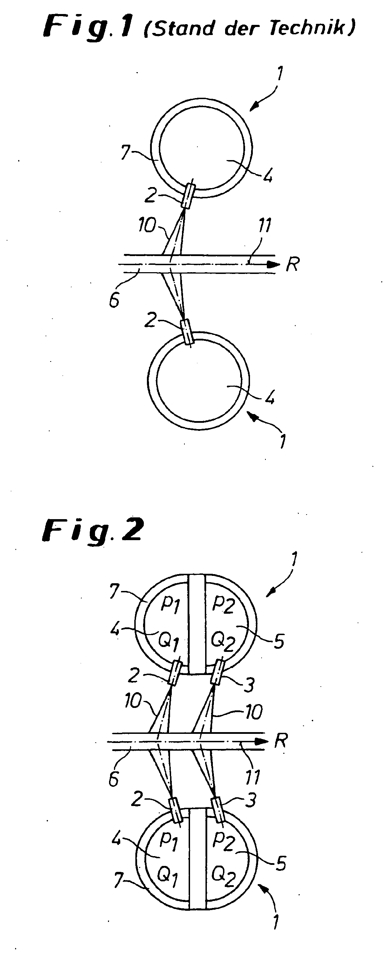

Eine vorbekannte Vorrichtung zur Entzunderung eines metallischen Gutes ist in Fig. 1 dargestellt. Die dort schematisch gezeigte Entzunderungsvorrichtung weist je einen oberhalb und unterhalb des zu entzundernden Guts 6 angeordneten Spritzbalken 1 auf, der in seinem Inneren einen Versorgungskanal 4 zur Versorgung mit Entzunderungsfluid aufweist. Dieses wird über Spritzdüsen 2 auf die Oberfläche des Gutes 6 aufgespritzt, wobei das Gut 6 in Förderrichtung R relativ zu den ortsfesten Spritzbalken 1 bewegt wird. Das Entzunderungsfluid bildet einen kegelförmigen Strahl 10. Vorliegend befinden sich die beiden Spritzbalken 1 spiegelbildlich zur Mittenebene 11 des Gutes 6 oberhalb bzw. unterhalb desselben.

In der DE 198 17 002 A1 ist eine Einrichtung zum Entzundern von Halbzeugen, wie Bändern bzw. Blechen aus Metall, beschrieben, die eine Düsenvorrichtung aufweist, die auf die Oberfläche des relativ zu der Düsenvorrichtung bewegten Halbzeugs unter Hochdruck ein Fluid aufbringt. Die Düsenvorrichtung ist dabei gegenüber der Oberfläche des Halbzeugs verstellbar. Zur optimalen Einstellung des Abstandes zwischen den Düsen und der Bandoberfläche ist vorgesehen, dass Mittel zum direkten Erfassen des Bandprofils angeordnet sind und dass abhängig hiervon die Düsenvorrichtung höhenverstellbar ist. Dabei werden mehrere einzelne, unabhängige Düsenreihen eingesetzt.

Die EP 1 077 095 B1 beschreibt eine Vorrichtung zum hydromechanischen Entzundern von stranggegossenen Brammen bzw. warmgewalztem Metallband, wobei jeweils einer Bandseite zugeordnete, in Bandlaufrichtung hintereinander sowie seitlich zueinander versetzt angeordnete Wasserspritzdüsen zum Aufspritzen von Hochdruck-Wasserstrahlen auf die beidseitigen Bandoberflächen vorgesehen sind, von welchen die der Bandoberseite zugeordneten Düsenreihen zusammen mit Auffangrinnen jeweils um eine Achse verschwenkbar und nach Maßgabe des Signals einer Messeinrichtung gegenüber der Bandoberseite höhenverstellbar sind. Auch hier werden mehrere einzelne, unabhängige Düsenreihen eingesetzt.

Die DE 198 05 377 A1 offenbart einen Spritzbalken einer hydraulischen Entzunderungsanlage, mit einer in einer Reihe angeordneten Gruppe von Spritzdüsen, wobei diese durch Betätigen eines gemeinsamen Verstellorgangs einzeln schaltbar sind. Auch hier wird ein Entzunderungsbalken mit einer einzelnen Düsenreihe vorgesehen, bei der die Anzahl der aktiven Düsen eingestellt werden kann.

Alle vorbekannten Lösungen gemäß dem Stand der Technik beschreiben jeweils Entzunderungsbalken mit einer einzelnen Düsenreihe. Nachteilig ist bei derartigen Lösungen, dass sie keine ausreichende Flexibilität beim Ausfall von Entzunderungsdüsen und nur eine geringe Flexibilität bei unterschiedlichen Betriebsanforderungen an die Entzunderung aufweisen.

Dabei kann es insbesondere zu einer Qualitätsminderung und einem Produktionsausfall beim Ausfall einzelner Düsen kommen. Fällt in einer Reihe von Entzunderungsdüsen eine oder mehrere Düsen aus, wird der bisher von den Düsen entzunderte Bereich nicht mehr bearbeitet. Der Zunder verbleibt auf dem Walzgut mit negativen Auswirkungen auf die Materialqualität und den Verschleiß der nachfolgenden Einrichtungen. Üblicherweise muss die Produktion bis zum Austausch der ausgefallenen Düsen unterbrochen werden, was entsprechende Produktionsausfallkosten verursacht.

Des weiteren besteht in nachteiliger Weise keine Möglichkeit, unterschiedliche Betriebsweisen zu fahren. In vielen Betriebsfällen ist es sinnvoll, die Entzunderungswirkung gezielt zu variieren. Mit den vorhandenen Einrichtungen ist im wesentlichen nur eine Veränderung des Mediendrucks und der davon abhängigen Parameter möglich. Weitere grundlegende Änderungen der Betriebsweise sind indes nicht möglich.

Nachteilig sind die vorbekannten Lösungen auch beim Einsatz mehrerer gleichartiger Entzunderungseinrichtungen. Hierdurch kann eine erhöhte Flexibilität zwar erreicht werden, indem nämlich mehrere gleiche oder ähnliche Entzunderungseinrichtungen hintereinander angeordnet werden. Die Nachteile einer solchen Lösung sind aber insbesondere die höheren Herstell- und Wartungskosten, der höhere Platzbedarf in der Walzanlage und der Umstand, dass durch die Verlängerung der Walzanlage das heiße Material eine größere Laufstrecke zurücklegen muss. Dafür wird eine längere Laufzeit benötigt, und das Walzgut hat längere Zeit Kontakt mit der Luft. Durch diese längere Kontaktzeit mit der Luft nimmt die Zunderbildung auf dem Walzgut zu.

Der vorliegenden Erfindung liegt daher die Aufgabe zugrunde, die Betriebssicherheit einer gattungsgemäßen Entzunderungsanlage und namentlich deren Spritzbalken zu erhöhen sowie die Flexibilität bei der Entzunderung von durchlaufendem, heißen Material zu verbessern, insbesondere von Stahl in einer Walzstraße. Hierzu soll sowohl eine entsprechende Vorrichtung als auch eine vorteilhafte Verfahrensweise vorgeschlagen werden.

Die Lösung dieser Aufgabe durch die Erfindung ist vorrichtungstechnisch dadurch gekennzeichnet, dass der Spritzbalken mindestens zwei nahe beieinander angeordnete Versorgungskanäle aufweist, die jeweils unterschiedliche Gruppen von Spritzdüsen mit Entzunderungsfluid versorgen.

Die mindestens zwei unmittelbar aneinandergrenzend, somit nahe beieinander angeordneten Versorgungskanäle können in Förderrichtung des zu entzundernden Guts aufeinander folgend angeordnet sein. Die mindestens zwei Versorgungskanäle sind bevorzugt in einem gemeinsamen Gehäuse angeordnet. Ferner kann das Gehäuse zwei rohrförmige Versorgungskanäle mit halbkreisförmigem Querschnitt aufweisen.

Jeder Versorgungskanal kann eine Anzahl Spritzdüsen mit Entzunderungsfluid versorgen, wobei die Spritzdüsen in Richtung quer zur Förderrichtung des zu entzundemden Guts im Abstand zueinander angeordnet sind. Die Spritzdüsen, die den mindestens zwei Versorgungskanälen zugeordnet sind, können gleich oder unterschiedlich ausgebildet sein.

Ferner können Mittel zum Schalten der Fluidversorgung zu einem Versorgungskanal unabhängig von der Fluidversorgung eines anderen Versorgungskanals vorgesehen werden.

Weiterhin kann eine gemeinsame Zusatz- oder Nachfolgeeinrichtung dem Spritzbalken und aller seiner Spritzdüsen zugeordnet sein. Als Zusatz- oder Nachfolgeeinrichtung kommt insbesondere eine Auffangeinrichtung für Entzunderungsfluid in Frage; es kann sich aber beispielsweise auch um Abquetschrollen handeln, die sich an das zu entzundernde Gut anlegen.

Schließlich können Mittel zum Einstellen des Abstands zwischen dem Spritzbalken und der Oberfläche des zu entzundernden Guts vorhanden sein.

Das erfindungsgemäße Verfahren zum Betrieb eines Spritzbalkens, wie er oben beschrieben wurde, ist dadurch gekennzeichnet, dass ein in Förderrichtung des zu entzundernden Guts vorne liegender Versorgungskanal mit einem ersten Druck und ein in Förderrichtung des zu entzundernden Guts folgender Versorgungskanal mit einem verglichen mit dem ersten Druck niedrigeren Druck versorgt wird.

Dabei kann insbesondere vorgesehen sein, dass durch den in Förderrichtung des zu entzundernden Guts nachfolgenden Versorgungskanal ein höherer Volumenstrom gefördert wird als durch den vorangehenden Versorgungskanal.

Eine alternative Verfahrenweise zum Betrieb eines Spritzbalkens ist dadurch gekennzeichnet, dass ein in Förderrichtung des zu entzundernden Guts vorne liegender Versorgungskanal mit einem ersten Druck und ein in Förderrichtung des zu entzundernden Guts folgender Versorgungskanal mit einem verglichen mit dem ersten Druck höheren Druck versorgt wird.

Eine besonders vorteilhafte Betriebsweise ergibt sich, wenn das Entzunderungsergebnis an einer in Förderrichtung des zu entzundernden Guts nachfolgenden Stelle ermittelt und in Abhängigkeit von diesem Messergebnis die Beaufschlagung der mindestens zwei Versorgungskanäle mit Entzunderungsfluid gesteuert oder geregelt wird.

Die vorliegende Erfindung beschreibt also eine Entzunderungseinrichtung, die einen oder mehrere Entzunderungsbalken mit mehreren Düsen bzw. Düsenreihen in einer zusammengehörigen Einheit aufweist. Die Düsen bzw. Düsenreihen können dabei separat geschaltet werden.

Durch den erfindungsgemäßen Vorschlag ergeben sich diverse Vorteile:

Zunächst kann eine Erhöhung der Betriebssicherheit und eine Verringerung von Produktionsausfall erreicht werden. Fällt eine Düse bzw. innerhalb einer Düsenreihe eine oder mehrere Düsen aus, kann auf die weitere vorgesehene Düse bzw. Düsenreihe umgeschaltet werden. Dies kann in kurzer Zeit und ohne Produktionsausfall erfolgen.

Weiterhin ergibt sich die Möglichkeit, unterschiedliche Betriebsweisen zu fahren. Mit der vorgeschlagenen Anordnung kann für verschiedene Betriebsfälle die Entzunderungswirkung gezielt variiert werden. Es ergibt sich dabei eine Vielzahl von Variationsmöglichkeiten. Eine unterschiedliche Schaltung der Düsen bzw. Düsenreihen können z. B. jeweils einzeln, gemeinsam oder bei der Verwendung von mehr als zwei Düsen oder Düsenreihen in Gruppen erfolgen. Weiterhin ist ein Wechsel der Schaltung in zeitlichen Abständen in Abhängigkeit der Erfordernisse möglich.

Unterschiedliche Parameter für die Auslegung und den Betrieb der Düsen bzw. Düsenreihen können z. B. sein: der Mediendruck, die Medienmenge pro Zeiteinheit (Volumenstrom), die Art des für die Entzunderung benutzten Mediums (z. B. Wasserdampf, Wasser, Wasser mit festen oder flüssigen Reinigungszusätzen), der Düsenquerschnitt der Düse, der Düsenabstand, der Düsenanstellwinkel, der Düsenverdrehwinkel oder die Spritzbreite einer Düsenreihe.

Unterschiedliche Betriebsfälle können sich dabei beispielsweise ergeben bei der Bearbeitung unterschiedlicher Stahlsorten, bei der Bearbeitung von unterschiedlich breiten Materialien, bei der Bearbeitung unterschiedlich heißer Materialien, bei unterschiedlich gewünschter Materialabkühlung und bei in Materiallaufrichtung unterschiedlichen Materialeigenschaften.

Die neue vorgeschlagene Verfahrensweise erlaubt es, eine neue kombinierte Betriebsweise zu fahren. Mit der vorgeschlagenen Vorrichtung können bislang nicht mögliche Betriebsweisen auf sehr kompaktem Raum gefahren werden. Dies wird möglich durch den Einsatz der örtlich nah beieinander angeordneten Düsen bzw. Düsenreihen, beispielsweise im Doppelbetrieb.

Beispiele für neue Betriebsweisen sind:
die Entzunderung mit einer in Förderrichtung vorderen Düse bzw. Düsenreihe mit hohem Druck und das Zurückhalten des in Materiallaufrichtung abfließenden Mediums mit einer in Förderrichtung folgenden Düse bzw. Düsenreihe bei geringem Druck;
die Entzunderung mit einer in Förderrichtung vorderen Düse bzw. Düsenreihe mit hohem Druck und die Kühlung des Materials mit der in Förderrichtung folgenden Düse bzw. Düsenreihe mit hoher Medienmenge (hohem Volumenstrom);
das Wegspülen des Zunders mit der vorderen Düse bzw. Düsenreihe bei geringem Druck und die Entzunderung des Materials mit der folgenden Düse bzw. Düsenreihe mit hohem Druck;

Ist keine Verstellung des Abstands zwischen Düse und Oberfläche des zu entzundernden Guts möglich, kann der Abstand auch durch unterschiedliche Anordnung der Düsen bzw. Düsenreihen variiert werden. Hierdurch kann auch eine Kompensation des Abstands bei beispielsweise unterschiedlichen Materialdicken erfolgen.

Vorteilhaft zeichnet sich der Erfindungsvorschlag auch dadurch aus, dass ein geringer Platzbedarf für die Anlage benötigt wird. Durch die neue Anordnung der Vorrichtung ist der erforderliche Platzbedarf gegenüber dem Einsatz mehrer, hintereinander angeordneter Entzunderungseinrichtungen gemäß dem Stand der Technik nach Fig. 1 deutlich geringer. Steht z. B. bei Modernisierungen bestehender Anlagen wenig Platz zur Verfügung, können nur mit der neuen Anordnung die Anforderungen an die Flexibilität oder an die Betriebssicherheit erfüllt werden. Durch den geringen Platzbedarf ergeben sich weitere folgende Vorteile:
geringere Herstell- und Wartungskosten für die Entzunderungseinrichtung und die Aufbereitung des Mediums;
Verkürzung der gesamten Anlage;
Verkürzung der Laufstrecke für das heiße Material und dadurch geringere Materialabkühlung durch kürzere Kontaktzeit mit der Luft;
durch diese kürzere Kontaktzeit mit der Luft ist auch die weitere Zunderbildung reduziert.

Mit dem vorgeschlagenen Konzept kann also bei geringem Platzbedarf eine flexible Entzunderung durchgeführt werden. Die vorgeschlagene Vorrichtung sieht zwei oder mehrere örtlich nahe aneinander angeordnete Düsen oder Düsenreihen in kompakter Bauweise vor. Die Düsen bzw. Düsenreihen sind in Laufrichtung des Materials hintereinander angeordnet und überstreichen im wesentlichen die gleiche Materialoberfläche. Mit einer Verfahrensweise, diese Düsen oder Düsenreihen einzeln oder gleichzeitig mit einem Entzunderungsmedium zu beaufschlagen, entstehen neue Verfahrensmöglichkeiten. Dies gilt ebenfalls mit Blick darauf, unterschiedliche Düsenkonfigurationen und Medienparameter für die jeweiligen Düsenreihen einzusetzen.

Die Möglichkeiten und die Flexibilität im Betrieb kann durch folgende Maßnahmen noch erhöht werden:
Einrichtungen zur Aufnahme des Mediums nach dem Auftreffen auf die Oberfläche des zu entzundernden Materials können von mehreren Spritzdüsen bzw. Düsenreihen gemeinsam genutzt werden. Einem Austritt von Medium in bzw. gegen Materiallaufrichtung kann mit dem Einsatz von Abquetschrollen vor bzw. hinter der Entzunderungseinrichtung vorgebeugt werden.

Durch Füllen der Entzunderungsbalken mit Medium unter geringem Druck für die nicht mit hohem Druck betriebenen Düsen bzw. Düsenreihen kann erreicht werden, dass mit dem Mediumdurchfluss der Spritzbalken gekühlt und Druckspitzen bei der Umschaltung auf hohen Druck vermieden werden.

Vorteilhaft ist auch der Einsatz von Schnellwechselkupplungen für die Entzunderungsbalken. Genauso führt es zu verfahrenstechnischen Vorteilen, wenn eine Einstellmöglichkeit für den Abstand zwischen der Düse bzw. der Düsenreihe und dem zu entzundernden Gut vorgesehen wird.

Verbessert werden die Möglichkeiten der Einstellung durch fernsteuerbare Antriebe und Ventile. Einstellungen können z. B. sein: Medienfluss an/aus; Düsenreihe an/aus; Mediendruck; Abstand Düse-Material; Abstand Auffangeinrichtungen.

Eine Fernschaltung bzw. eine Anzeige der eingeschalteten Düsenreihe bzw. Düsenreihen an der Entzunderungseinrichtung, beispielsweise auf dem Bedienstand, macht ebenfalls den Betrieb der Anlage einfacher und effizient.

Mit einem Oberflächenmessgerät hinter der Entzunderungseinrichtung kann die Entzunderungsqualität direkt kontrolliert werden und eine Umschaltung auf eine andere Düsenreihe automatisch oder haltautomatisch erfolgen.

Bei der Kopplung mit einem übergeordneten Leitsystem können die Düsenreihen unter Berücksichtigung der aktuellen Produktionsparameter teilweise oder vollständig automatisiert umgeschaltet werden bzw. dem Bedienpersonal entsprechende Vorschläge an die Hand gegeben werden.

Insgesamt ergibt sich eine Erhöhung der Betriebssicherheit und eine Reduzierung der Ausfallzeiten beim Einsatz einer gattungsgemäßen Entzunderungsanlage. Eine Anpassung der Betriebsweise einer Entzunderungsanlage an unterschiedliche Betriebserfordernisse kann in optimaler Weise erfolgen. Ferner besteht die Möglichkeit, neue Betriebsweisen einzusetzen. Schließlich verringert sich der Platzbedarf für die Entzunderungseinrichtung.

In der Zeichnung sind Ausführungsbeispiele der Erfindung dargestellt. Es zeigen:
- Fig. 1: schematisch den Schnitt durch einen Teil einer Entzunderungsanlage mit einem oberen und einem unteren Spritzbalken gemäß dem Stand der Technik,
- Fig. 2: schematisch den Schnitt durch einen Teil einer Entzunderungsanlage mit einem oberen und einem unteren Spritzbalken gemäß einer ersten Ausführungsform der Erfindung,
- Fig. 3a: den unteren Spritzbalken gemäß Fig. 2 mit Darstellung einer ersten Schaltung von Entzunderungsfluid,
- Fig. 3b: den unteren Spritzbalken gemäß Fig. 2 mit Darstellung einer zweiten Schaltung von Entzunderungsfluid,
- Fig. 4a: eine zu Fig. 3a analoge Darstellung einer alternativen Ausführungsform,
- Fig. 4b: eine zu Fig. 3b analoge Darstellung einer alternativen Ausführungsform,
- Fig. 5a: eine zu Fig. 3a analoge Darstellung einer weiteren alternativen Ausführungsform,
- Fig. 5b: eine zu Fig. 3b analoge Darstellung einer weiteren alternativen Ausführungsform und
- Fig. 6: schematisch den Schnitt durch einen Teil einer Entzunderungsanlage mit der Darstellung einer Zusatz- oder Nachfolgeeinrichtung.

In Fig. 2 ist ein Teil einer nicht weiter dargestellten Entzunderungsanlage für bandförmiges Material dargestellt, wobei ein Band 6 in eine Förderrichtung R an ortsfesten Spritzbalken 1 vorbeiläuft. Dabei ist je ein Spritzbalken 1 - spiegelbildlich zur Mittenebene 11 des Bandes 6 - oberhalb und unterhalb des Bandes 6 angeordnet.

Wesentlich ist, dass der Spritzbalken mindestens zwei nahe beieinander angeordnete Versorgungskanäle 4 und 5 aufweist, die zwei unterschiedliche Gruppen von Spritzdüsen 2 und 3 mit Entzunderungsfluid versorgen. In dem Ausführungsbeispiel ist ein gemeinsames, rohrförmiges Gehäuse 7 mit dem dargestellten Profil vorgesehen, das zwei halbkreisförmige Abschnitte aufweist; jeder halbkreisförmige Abschnitt bildet einen Versorgungskanal 4, 5, durch den Entzunderungsfluid, vorliegend Wasser, gepumpt wird. Beide Versorgungskanäle 4, 5 sind fluidisch voneinander getrennt, d. h. sie können gänzlich unabhängig voneinander mit Wasser beaufschlagt werden.

Die Spritzdüsen 2 bzw. 3 sind am Gehäuse 7 angeordnet und stehen fluidisch mit ihren jeweiligen Versorgungskanälen 4, 5 in Verbindung. Dabei sind, was in der Figur nicht gesehen werden kann, quer über die Breite des Bandes 6 in bekannter Weise eine Anzahl Spritzdüsen 2, 3 vorgesehen, um die gesamte Breite des Bandes 6 abdecken, d. h. entzundern zu können.

Wird ein Versorgungskanal 4, 5 mit Wasser beaufschlagt, spritzt aus den Düsen 2, 3 ein kegelförmiger Strahl 10 gegen die Bandoberfläche. Beim Ausführungsbeispiel gemäß Fig. 2 sind beide Versorgungskanäle 4, 5 mit Wasser beaufschlagt, der Wasserdruck ist mit p₁ bzw. mit p₂ angegeben. In Abhängigkeit des Drucks und der Strömungsmechanik ergibt sich ein Volumenstrom Q₁ bzw. Q₂, der über die Düsen 2, 3 austritt. Im vorliegenden Ausführungsbeispiel sind die Drücke p₁ und p₂ gleich groß, es treten bei gleichen Düsen 2, 3 gleiche Volumenströme Q₁ und Q₂ aus.

Der Entzunderungs- bzw. Spritzbalken 1 besitzt also zwei oder mehr örtlich nahe beieinander angeordnete Versorgungskanäle 4, 5, so dass die Düsen bzw. Düsenreihen 2, 3 spezifisch und individuell mit Wasser beaufschlagt werden können. D. h. es ergibt sich dadurch eine erhöhte Flexibilität, dass die Düsen 2, 3 unabhängig voneinander gemeinsam oder einzeln geschaltet werden können. Während in Fig. 2 eine spiegelbildliche Anordnung der beiden Spritzbalken 1 dargestellt ist, können diese in Förderrichtung R auch versetzt angeordnet sein.

Die Düsen 2, 3 sind in den Ausführungsbeispielen gleich ausgebildet, dies ist jedoch keineswegs zwingend. Es können auch unterschiedliche Düsen in den einzelnen Düsenreihen 2, 3 vorgesehen werden.

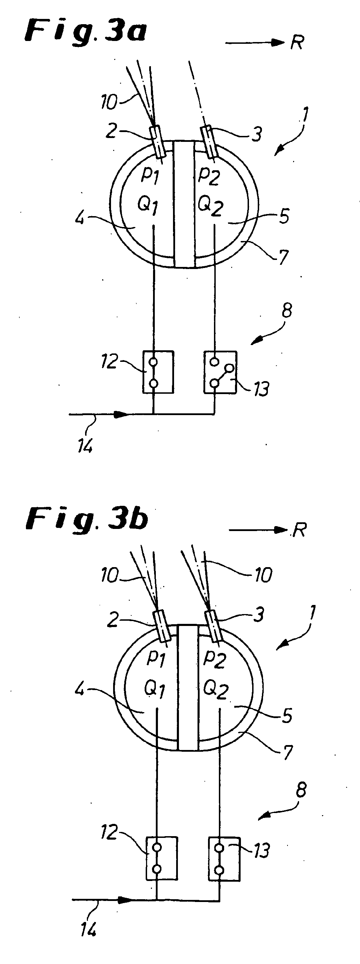

In den Figuren 3a und 3b sind Mittel 8 zum Schalten vorgesehen, die Ventile 12 und 13 aufweisen, mit denen die Zufuhr von Wasser zu den Versorgungskanälen 4 und 5 gezielt eingestellt werden kann.

In Fig. 3a wird nur der Versorgungskanal 4 mit Wasser beaufschlagt; der Versorgungskanal 5 wird nicht versorgt. Demgemäß tritt nur aus der Düse 2 Wasser aus.

Bei der in Fig. 3b dargestellten Konfiguration sind indes beide Versorgungskanäle 4, 5 mit Wasser versorgt, wie es anhand der Stellung der Ventile 12, 13 gesehen werden kann.

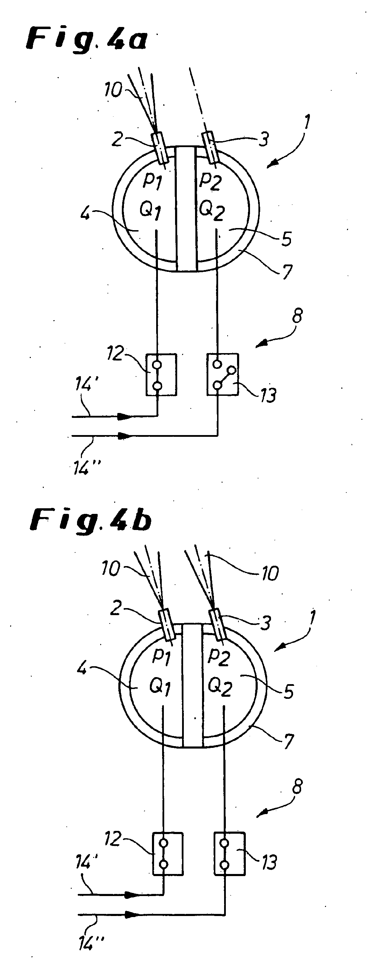

Während in den Figuren 3a und 3b die beiden Ventile 12, 13 der Mittel 8 zum Schalten von einer gemeinsamen Wasserleitung 14 aus mit Wasser versorgt werden, ist in Fig. 4a und 4b vorgesehen, dass jedes Ventil 12, 13 seine eigene Wasserleitung 14' bzw. 14" hat. Daraus sind wiederum analog zu Fig. 3a/3b die in den Figuren 4a/4b gezeigten Schaltungszustände möglich.

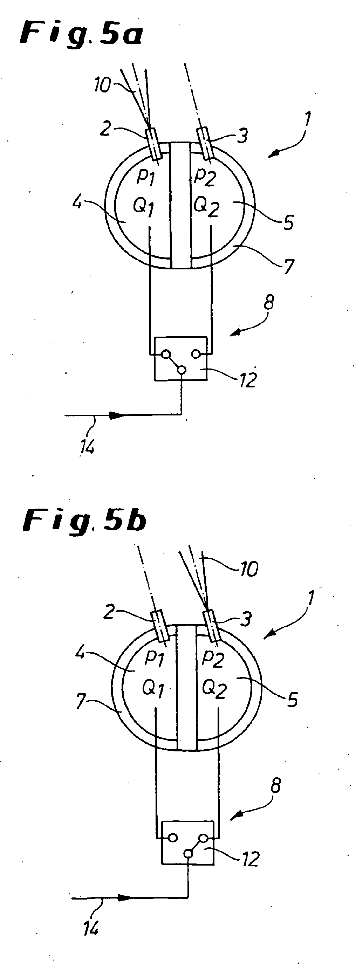

Ein kostengünstigeres und weniger Platz benötigendes, freilich aber auch nicht mehr so flexibles Konzept ist in Fig. 5a und 5b dargestellt. Hier ist nur ein Ventil 12 vorgesehen, mit dem wahlweise entweder der Versorgungskanal 4 oder der Versorgungskanal 5 mit Wasser beaufschlagt werden kann.

Die Ventile 12, 13 können örtlich direkt an den Spritzbalken 1 angeordnet sein, gegebenenfalls sogar als bauliche Einheit mit den Balken verwirklicht sein.

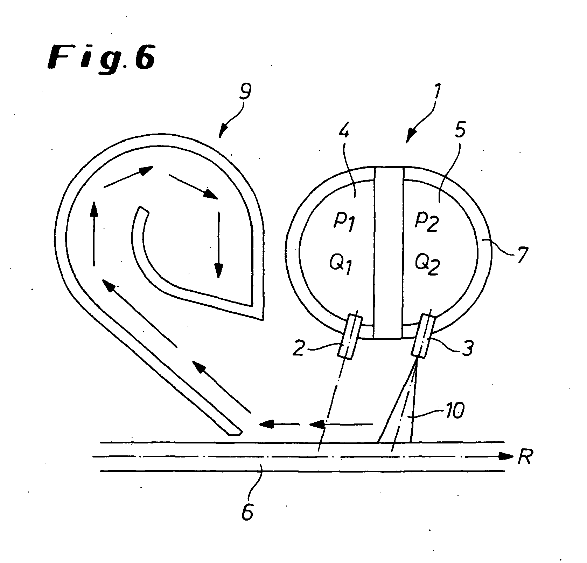

In Fig. 6 ist schließlich zu sehen, wie eine Zusatz- oder Nachfolgeeinrichtung 9 angeordnet vorgesehen werden kann. Hier ist eine Vorrichtung 9 zur Aufnahme des Mediums nach der Entzunderung vorgesehen, die von beiden Düsen bzw. Düsenreihen 2, 3 gleichzeitig genutzt werden.

### Bezugszeichenliste:

- 1: Spritzbalken
- 2: Spritzdüse
- 3: Spritzdüse
- 4: Versorgungskanal
- 5: Versorgungskanal
- 6: zu entzunderndes Gut (Band)
- 7: Gehäuse
- 8: Mittel zum Schalten
- 9: Zusatz- oder Nachfolgeeinrichtung
- 10: kegelförmiger Strahl
- 11: Mittenebene
- 12: Ventil
- 13: Ventil
- 14: Wasserleitung
- 14': Wasserleitung
- 14": Wasserleitung

- R: Förderrichtung
- P₁: erster Druck
- p₂: zweiter Druck
- Q₁: erster Volumenstrom
- Q₂: zweiter Volumenstrom

## Patentansprüche

1. Spritzbalken (1) einer hydraulischen Entzunderungsanlage, die eine Anzahl Spritzdüsen (2, 3) aufweist, die von mindestens einem Versorgungskanal (4, 5) des Spritzbalkens (1) mit Entzunderungsfluid versorgt werden kann,
**dadurch gekennzeichnet,**
**dass** der Spritzbalken (1) mindestens zwei nahe beieinander angeordnete Versorgungskanäle (4, 5) aufweist, die jeweils unterschiedliche Spritzdüsen (2, 3) oder Gruppen von Spritzdüsen (2, 3) mit Entzunderungsfluid versorgen.

2. Spritzbalken nach Anspruch 1,
**dadurch gekennzeichnet,**
**dass** die Versorgungskanäle (4, 5) in Förderrichtung (R) des zu entzundernden Guts (6) aufeinander folgend angeordnet sind.

3. Spritzbalken nach Anspruch 1 oder 2,
**dadurch gekennzeichnet,**
**dass** die Versorgungskanäle (4, 5) in einem gemeinsamen Gehäuse (7) angeordnet sind.

4. Spritzbalken nach einem der Ansprüche 1 bis 3,
**dadurch gekennzeichnet,**
**dass** das Gehäuse (7) zwei rohrförmige Versorgungskanäle (4, 5) mit halbkreisförmigem Querschnitt aufweist.

5. Spritzbalken nach einem der Ansprüche 1 bis 4,
**dadurch gekennzeichnet,**
**dass** jeder Versorgungskanal (4, 5) eine Anzahl Spritzdüsen (2, 3) mit Entzunderungsfluid versorgt, wobei die Spritzdüsen (2, 3) in Richtung quer zur Förderrichtung (R) des zu entzundernden Guts (6) im Abstand zueinander angeordnet sind.

6. Spritzbalken nach einem der Ansprüche 1 bis 5,
**dadurch gekennzeichnet,**
**dass** die den Versorgungskanälen (4, 5) zugeordneten Spritzdüsen (2, 3) gleich ausgebildet sind.

7. Spritzbalken nach einem der Ansprüche 1 bis 6,
**dadurch gekennzeichnet,**
**dass** die den Versorgungskanälen (4, 5) zugeordneten Spritzdüsen (2, 3) unterschiedlich ausgebildet sind.

8. Spritzbalken nach einem der Ansprüche 1 bis 7,
**dadurch gekennzeichnet,**
**dass** Mittel (8) zum Schalten der Fluidversorgung zu einem Versorgungskanal (4, 5) unabhängig von der Fluidversorgung eines anderen Versorgungskanals (4, 5) vorhanden sind.

9. Spritzbalken nach einem der Ansprüche 1 bis 8,
**dadurch gekennzeichnet,**
**dass** eine gemeinsame Zusatz- oder Nachfolgeeinrichtung (9) dem Spritzbalken (1) und aller seiner Spritzdüsen (2, 3) zugeordnet ist.

10. Spritzbalken nach Anspruch 9,
**dadurch gekennzeichnet,**
**dass** die Zusatz- oder Nachfolgeeinrichtung eine Auffangeinrichtung (9) für Entzunderungsfluid ist.

11. Spritzbalken nach Anspruch 9,
**dadurch gekennzeichnet,**
**dass** die Zusatz- oder Nachfolgeeinrichtung als sich an das zu entzundernde Gut (6) anlegenden Abquetschrollen ausgebildet sind.

12. Spritzbalken, nach einem der Ansprüche 1 bis 11,
**dadurch gekennzeichnet,**
**dass** Mittel zum Einstellen des Abstands zwischen dem Spritzbalken (1) und der Oberfläche des zu entzundernden Guts (6) vorhanden sind.

13. Verfahren zum Betreiben eines Spritzbalkens (1) nach einem der Ansprüche 1 bis 12.
**dadurch gekennzeichnet,**
**dass** ein in Förderrichtung (R) des zu entzundernden Guts (6) vorne liegender Versorgungskanal (4) mit einem ersten Druck (p₁) und ein in Förderrichtung (R) des zu entzundernden Guts (6) folgender Versorgungskanal (5) mit einem verglichen mit dem ersten Druck (p₁) niedrigeren Druck (p₂) versorgt wird.

14. Verfahren nach Anspruch 13,
**dadurch gekennzeichnet,**
**dass** durch den in Förderrichtung (R) des zu entzundernden Guts (6) nachfolgenden Versorgungskanal (5) ein höherer Volumenstrom (Q₂) gefördert wird als durch den vorangehenden Versorgungskanal (4).

15. Verfahren zum Betreiben eines Spritzbalkens (1) nach einem der Ansprüche 1 bis 12,
**dadurch gekennzeichnet,**
**dass** ein in Förderrichtung (R) des zu entzundernden Guts (6) vorne liegender Versorgungskanal (4) mit einem ersten Druck (p₁) und ein in Förderrichtung (R) des zu entzundernden Guts (6) folgender Versorgungskanal (5) mit einem verglichen mit dem ersten Druck (p₁) höheren Druck (p₂) versorgt wird.

16. Verfahren nach einem der Ansprüche 13 bis 15,
**dadurch gekennzeichnet,**
**dass** das Entzunderungsergebnis an einer in Förderrichtung (R) des zu entzundernden Guts (6) dem Spritzbalken (1) nachfolgenden Stelle ermittelt und in Abhängigkeit von diesem Messergebnis die Beaufschlagung der mindestens zwei Versorgungskanäle (4, 5) mit Entzunderungsfluid gesteuert oder geregelt wird.

## Claims

1. Spray bar (1) of a hydraulic descaling installation, which has a plurality of spray nozzles (2, 3) which can be supplied with descaling fluid by at least one supply channel (4, 5) of the spray bar (1), **characterised in that** the spray bar (1) has at least two supply channels (4, 5) which are arranged closely adjacent to one another and which each supply different spray nozzles (2, 3) or groups of spray nozzles (2, 3) with descaling fluid.

2. Spray bar according to claim 1, **characterised in that** the supply channels (4, 5) are arranged in succession in conveying direction (R) of the material (6) to be descaled.

3. Spray bar according to claim 1 or 2, **characterised in that** the supply channels (4, 5) are arranged in a common housing (7).

4. Spray bar according to any one of claims 1 to 3, **characterised in that** the housing (7) has two tubular supply channels (4, 5) with semicircular cross-section.

5. Spray bar according to any one of claims 1 to 4, **characterised in that** each supply channel (4, 5) supplies a plurality of spray nozzles (2, 3) with descaling fluid, wherein the spray nozzles (2, 3) are arranged at a spacing from one another in a direction transverse to the conveying direction (R) of the material (6) to be descaled.

6. Spray bar according to any one of claims 1 to 5, **characterised in that** the spray nozzles (2, 3) associated with the supply channels (4, 5) are of the same construction.

7. Spray bar according to any one of claims 1 to 6, **characterised in that** the spray nozzles (2, 3) associated with the supply channels (4, 5) are of different construction.

8. Spray bar according to any one of claims 1 to 7, **characterised in that** means (8) for switching the fluid supply to a supply channel (4, 5) independently of the fluid supply of another supply channel (4, 5) are present.

9. Spray bar according to any one of claims 1 to 8, **characterised in that** a common supplementary or downstream device (9) is associated with the spray bar (1) and all the spray nozzles (2, 3) thereof.

10. Spray bar according to claim 9, **characterised in that** the supplementary or downstream device is a collecting device (9) for descaling fluid.

11. Spray bar according to claim 9, **characterised in that** the supplementary or downstream device is constructed as squeeze rollers bearing against the material (6) to be descaled.

12. Spray bar according to any one of claims 1 to 11, **characterised in that** means for setting the spacing between the spray bar (1) and the surface of the material (6) to be descaled are present.

13. Method of operating a spray bar (1) according to any one of claims 1 to 12, **characterised in that** a supply channel (4) upstream in the conveying direction (R) of the material (6) to be descaled is supplied at a first pressure (p₁) and a supply channel (5) downstream in the conveying direction (R) of the material (6) to be descaled is supplied at a pressure (p₂) which is lower by comparison with the first pressure (p₁).

14. Method according to claim 13, **characterised in that** a higher volume flow (Q₂) is conveyed by the supply channel (5) downstream in the conveying direction (R) of the material (6) to be descaled than by the upstream supply channel (4).

15. Method of operating a spray bar (1) according to any one of claims 1 to 12, **characterised in that** a supply channel (4) upstream in the conveying direction (R) of the material (6) to be descaled is supplied at a first pressure (p₁) and a supply channel (5) downstream in the conveying direction (R) of the material (6) to be descaled is supplied at a pressure (p₂) which is higher by comparison with the first pressure (p₁).

16. Method according to any one of claims 13 to 15, **characterised in that** the descaling result is determined at a point downstream of the spray bar (1) in conveying direction (R) of the material (6) to be descaled and the charging of the at least two supply channels (4, 5) with descaling fluid is controlled or regulated in dependence on this measurement result.

## Revendications

1. Rampe de pulvérisation (1) d'une installation de décalaminage hydraulique, qui présente une série de pulvérisateurs (2, 3), qui peut être ailmentée en liquide de décalaminage à partir d'au moins un canal d'alimentation (4, 5) de la rampe de pulvérisation (1), **caractérisée en ce que** la rampe de pulvérisation (1) présente au moins deux canaux d'alimentation (4, 5) disposés l'un près de l'autre, qui alimentent à chaque fois des pulvérisateurs (2, 3) différents ou des groupes différents de pulvérisateurs (2, 3) en liquide de décalaminage.

2. Rampe de pulvérisation selon la revendication 1, **caractérisée en ce que** les canaux d'alimentation (4, 5) sont disposés l'un derrière l'autre dans le sens de transport (R) du produit (6) à décalaminer.

3. Rampe de pulvérisation selon la revendication 1 ou 2, **caractérisée en ce que** les canaux d'alimentation (4, 5) sont disposés dans un châssis (7) commun.

4. Rampe de pulvérisation selon l'une quelconque des revendications 1 à 3, **caractérisée en ce que** le châssis (7) présente deux canaux d'alimentation (4, 5) tubulaires avec une section semi-circulaire.

5. Rampe de pulvérisation selon l'une quelconque des revendications 1 à 4, **caractérisée en ce que** chaque canal d'alimentation (4, 5) alimente une série de pulvérisateurs (2, 3) en fluide de décalaminage, les pulvérisateurs (2, 3) étant disposés à une certaine distance l'un de l'autre dans un sens transversal par rapport au sens de transport (R) du produit à décalaminer (6).

6. Rampe de pulvérisation selon l'une quelconque des revendications 1 à 5, **caractérisée en ce que** les pulvérisateurs (2, 3) associés aux canaux d'alimentation (4, 5) présentent une réalisation identique.

7. Rampe de pulvérisation selon l'une quelconque des revendications 1 à 6, **caractérisée en ce que** les pulvérisateurs (2, 3) associés aux canaux d'alimentation (4, 5) présentent une réalisation différente.

8. Rampe de pulvérisation selon l'une quelconque des revendications 1 à 7, **caractérisée en ce que** des moyens (8) pour commuter l'alimentation en fluide vers un canal d'alimentation (4, 5) sont présents, indépendamment de l'alimentation en fluide d'un autre canal d'alimentation (4, 5).

9. Rampe de pulvérisation selon l'une quelconque des revendications 1 à 8, **caractérisée en ce qu'**un dispositif supplémentaire ou consécutif (9) commun est associé à la rampe de pulvérisation (1) et tous ses pulvérisateurs (2, 3).

10. Rampe de pulvérisation selon la revendication 9, **caractérisée en ce que** le dispositif supplémentaire ou consécutif est un dispositif de récupération (9) pour le fluide de décalaminage.

11. Rampe de pulvérisation selon la revendication 9, **caractérisée en ce que** le dispositif supplémentaire ou consécutif est réalisé sous forme de rouleaux d'écrasement disposés contre le produit à décalaminer (6).

12. Rampe de pulvérisation selon l'une quelconque des revendications 1 à 11, **caractérisée en ce que** des moyens pour régler la distance entre la rampe de pulvérisation (1) et la surface du produit à décalaminer (6) sont présents.

13. Procédé pour exploiter une rampe de pulvérisation (1) selon l'une quelconque des revendications 1 à 12, **caractérisé en ce qu'**un canal d'alimentation (4) situé en amont dans le sens de transport (R) du produit à décalaminer (6) est alimenté par une première pression (p₁) et un canal d'alimentation (5) disposé en aval dans le sens de transport (R) du produit à décalaminer (6) est alimenté avec une pression (p₂) inférieure à la première pression (p₁).

14. Procédé selon la revendication 13, **caractérisé en ce qu'**un flux volumique (Q₂) plus important est transporté dans le canal d'alimentation (5) en aval dans le sens du transport (R) du produit à décalaminer (6) que dans le canal d'alimentation (4) précédent.

15. Procédé pour exploiter une rampe de pulvérisation (1) selon l'une quelconque des revendications 1 à 12, **caractérisé en ce qu'**un canal d'alimentation (4) situé en amont dans le sens de transport (R) du produit à décalaminer (6) est alimenté par une première pression (p₁) et un canal d'alimentation (5) disposé en aval dans le sens de transport (R) du produit à décalaminer (6) est alimenté avec une pression (p₂) supérieure à la première pression (p₁).

16. Procédé selon l'une quelconque des revendications 13 à 15, **caractérisé en ce que** le résultat de décalaminage est déterminé en un endroit en aval de la rampe de pulvérisation (1) dans le sens de transport (R) du produit à décalaminer (6) et l'alimentation desdits au moins deux canaux d'alimentation (4, 5) en fluide de décalaminage étant contrôlée ou commandée en fonction de ce résultat de mesure.
